(19) **Europäisches Patentamt**

**European Patent Office**

**Office européen des brevets**

(11) **EP 1 112 968 A1**

(12) **EUROPEAN PATENT APPLICATION**
published in accordance with Art. 158(3) EPC

(43) Date of publication:
**04.07.2001 Bulletin 2001/27**

(51) Int Cl.⁷: **C02F 3/12**, C02F 3/34

(21) Application number: **00915492.3**

(22) Date of filing: **11.04.2000**

(86) International application number:
**PCT/JP00/02358**

(87) International publication number:
**WO 00/61503 (19.10.2000 Gazette 2000/42)**

(84) Designated Contracting States:
**AT BE CH CY DE DK ES FI FR GB GR IE IT LI LU MC NL PT SE**

(30) Priority: **13.04.1999 KR 9912976**

(71) Applicants:
• **N.S. Consultants Ltd.**
  **Tokyo 104-0032 (JP)**
• **Amcon Inc.**
  **Yokohama-shi, Kanagawa 223-0057 (JP)**
• **Hanshin Engineering Co., Ltd.**
  **Osaka-shi, Osaka 554-0014 (JP)**
• **Environmental Facilities Management Corp.**
  **Seoul (KR)**

• **OHK Co., Ltd.**
  **Seoul (KR)**

(72) Inventors:
• **ONODERA, Syori**
  **Ishinomaki-shi, Miyagi 986-0832 (JP)**
• **KAWAUCHI, Shoroku**
  **Itami-shi, Hyogo 664-0004 (JP)**
• **SASAKI, Masayoshi**
  **Yokohama-shi, Kanagawa 225-0024 (JP)**

(74) Representative: **Senior, Alan Murray**
  **J.A. KEMP & CO.,**
  **14 South Square,**
  **Gray's Inn**
  **London WC1R 5JJ (GB)**

(54) **SOIL WATER ACTIVATED SLUDGE TREATING SYSTEM AND METHOD THEREFOR**

(57) Activated sludge mixed liquor is directly removed from a reaction tank 1 and dewatered by a multi-disc dewatering machine 9. For the removal of the activated sludge mixed liquor, the operation of a pump P2 is controlled to keep the SRT in the reaction tank 1 at a predetermined value. Further, nitrification and denitrification are conducted while the ASRT is fixedly controlled by regulating a substantial ratio of the aerobic time.

Fig.1

EP 1 112 968 A1

Printed by Jouve, 75001 PARIS (FR)

**Description**

**TECHNICAL FIELD**

The present invention relates to an activated sludge treatment system and an activated sludge treatment process for wastewater, which are effectively applied to nitrification and denitrification treatments of wastewater such as sewage and industrial wastewater.

**BACKGROUND ART**

During the course of water purification by an activated sludge treatment process, if a proper amount of dissolved oxygen is present in a reaction tank, activated sludge adsorbs and oxidizes organic matters in wastewater, while eating the organic matters in the wastewater as food for its growth. Therefore, in designing the activated sludge treatment process and controlling its operation, it is important to keep the reaction in equilibrium, such that activated sludge in the reaction tank adsorbs and oxidizes organic contaminants for its growth.

The reaction rate is influenced by a number of factors including aeration time, quantity of activated sludge, quantity of influent organic matters, etc. Using the basic factor of these, "BOD-MLSS load" is expressed as a ratio of the quantity of influent organic matters [BOD (Biochemical Oxygen Demand)] relative to the quantity of activated sludge in the reaction tank (MLSS quantity). Because the range of this ratio is utilized to determine treatment processes, the ratio is a critical factor for the operation control. For example, the BOD-MLSS loads are 0.2 to 0.4 kg/kg-SS/day in the standard activated sludge process, and 0.03 to 0.05 kg/kg-SS/day in long-term aeration process. Thus, it is important for a stable treatment to keep the BOD-MLSS load at a fixed level. For this purpose, a proper sludge concentration in the reaction tank is set and controlled on the basis of the quantity of excess sludge removal.

To control the sludge concentration in the reaction tank in terms of the quantity of excess sludge removal, a proper sludge quantity in the tank is determined relative to the influent load. Then, a calculation is made to obtain an activated sludge concentration to be observed in the tank, according to which a proper quantity of excess sludge is removed from the final settling basin. However, just as the case of return sludge allowed to return into the reaction tank, the concentration is very susceptible to the change in the quantity of influent water and the rate of sludge settlement and, therefore, the concentration is broadly variable. The quantity of sludge removal is obtained as the product of the excess sludge concentration and the removal quantity (quantity of flow). In sewage treatment, the influent quantity varies so greatly as to cause a radical change of the excess sludge concentration, making it extremely difficult to adjust the sludge removal quantity as intended for maintenance of the predetermined activated sludge concentration in the tank.

On the other hand, results of recent water treatment researches show that the basic factor for activated sludge treatment is the sludge retention time [SRT (solids retention time)] defined as the time during which solids (activated sludge) are held in the reaction tank, rather than the BOD-MLSS load. This confirms the precedence of maintaining a proper sludge retention time (hereinafter mentioned as "SRT"). The SRT is a ratio of the quantity of activated sludge in the reaction tank relative to the quantity of sludge to be discharged out of the treatment system. Nevertheless, in the conventional process of removing excess sludge from the final settling basin, variation of the influent load causes a serious change in the concentration of removed sludge. This makes proper retention of SRT very troublesome (The quantity of sludge discharged out of the treatment system is equal to the sum of the quantity of excess sludge and treated water [SS (Suspended solids)]. Since the quantity of treated water SS is far less than the excess sludge quantity, the quantity of discharge out of the treatment system is approximately as much as the excess sludge quantity.).

In order to solve this defect involved in the laborious SRT control, there was devised a process of removing excess sludge directly from the reaction tank, instead of from a return sludge line in the final settling basin.

Specifically, in this process, the reaction tank is equipped with a pump for draining a preset amount of activated sludge liquor, and activated sludge liquor is removed and discharged out of the treatment system as excess sludge. The SRT is thus constantly controlled to a preset value. In other words, by removing a preset amount of activated sludge directly from the reaction tank, the SRT is maintained at a certain level, regardless of the quality and quantity of influent wastewater and changes of the sludge concentration in the reaction tank and of the return sludge concentration.

In fact, this process is strongly advantageous when the qualitative and quantitative loads of influent water show a small change. However, with a substantial change of the influent loads, as experienced in a sewage treatment plant located in a tourist spot where the volumes of loads are heavily dependent on the number of visitors and considerably variable between weekdays and weekends, fixing of SRT causes shift of the activated sludge concentration (hereinafter mentioned as "MLSS concentration") in the reaction tank. This process turns out to have a limited capacity in responding to the change of the loads.

In principle, the activated sludge process stabilizes the treatment by keeping the activated sludge quantity fixed relative to the volume of influent load, as expressed by the BOD-MLSS load. The design of a treatment plant is usually based on the point of the high influent load. Nevertheless, in the case of the above-mentioned tourist spot, where the influent load changes greatly but the designed load is limited, an SRT-fixed operation by the above measure decreases the MLSS concentration. On the other hand, an MLSS concentration-fixed operation results in a significant SRT shift. Under these operation conditions, extreme decrease in the volume of weekday load may not seriously affect the treatment in a direct manner, but the treatment capacity may often fail to recover by the subsequent heavily-loaded weekend.

This tendency is particularly apparent in the biological denitrification process which conducts nitrification and denitrification under alternate anaerobic/aerobic conditions. In activated sludge, nitrifying bacteria remain active as far as their population is balanced with the loads conditions. However, if the loads show a drastic change, it is awfully difficult to keep their activity accordingly.

For example, a single-tank anaerobic/aerobic process, which employs a submersible aerating/agitating device in a reaction tank and which alternates anaerobic and aerobic conditions, is supposed to be operated at a uniform MLSS concentration, with removing sludge in accordance with the volume of influent load. While the state of a minor volume of weekday influent load and a small $NH_4$-N load continues, if the ratio between anaerobic/aerobic operation times is the same as the ratio for a heavy-load weekend operation, the sludge retention time (SRT) or the solids retention time in the reaction tank under aerobic conditions (ASRT, aerobic solids retention time) is so long that the nitrifying bacteria in the sludge will die and/or decrease to show less activity. In this state, it is impossible to deal with a sudden rise of the loads, only to be followed by reduction of the treatment capacity and deterioration of the water quality. Thus, a treatment plant with a frequent shift of the loads finds it difficult to keep active conditions for a long period and maintain its treatment capacity.

For a stable treatment, another process was invented to ensure sufficient capacity despite a voluminous load variation. This measure combines the process for simplifying the SRT control and the process for controlling the ratio between anaerobic/aerobic times in the reaction tank as mentioned above.

In this process, the activated sludge liquor is directly removed from the reaction tank as excess sludge, in a quantity corresponding to the volume of influent load. As a result, the SRT is allowed to change in response to a large shift of the influent load volume. At the same time, the ASRT (solids retention time in the reaction tank under aerobic conditions) can be controlled to a fixed level by regulating a substantial ratio of the aerobic treatment time relative to the anaerobic treatment time, in response to the influent load volume. This process has manifested a remarkably advantageous treatment capacity.

To be specific, in this activated sludge treatment process, the reaction tank in which the activated sludge treatment proceeds with a cycle of anaerobic and aerobic conditions is equipped with removal means for discharging some of activated sludge liquor directly out of the system. While the quantity of activated sludge removal is regulated in accordance with the volume of influent load, a substantial ratio of the aerobic treatment time to the anaerobic treatment time is also regulated in view of the influent load volume. The ASRT can be controlled to a fixed level by such regulations. For this purpose, this system comprises means for discharging the activated sludge liquor out of the system directly from the reaction tank. The activated sludge liquor drained from the reaction system is usually reduced in weight by a dewatering machine and discharged in the form of dewatered cake.

The above process provides an excellent nitrogen removal process which is not affected by shifts of the volume of influent load. The essence of this process is to discharge the activated sludge liquor out of the system directly from the reaction tank. In contrast, the conventional sludge dewatering treatment thickens high-concentration excess sludge removed from the final settling tank, raw sludge from the primary settling basin, excess sludge to be mixed with the raw sludge, etc., and subjects the thickened high-concentration sludge mixture to a dewatering treatment.

In a conventional sludge dewatering treatment, the dewatering capacity drops critically, when the sludge mixed liquor has a low concentration (MLSS concentration). For this dewatering treatment, therefore, the mixture of raw sludge and excess sludge is thickened in a thickening tank to the MLSS concentration of about 25,000 to 35,000 mg/L.

If the activated sludge liquor is directly withdrawn from the reaction tank and discharged out of the system, the MLSS concentration is about 3,000 mg/L or lower, which is approximately one tenth of that of the thickened sludge. Hence, the dewatering efficiency is appallingly poor.

As described above, the problems of the conventional sludge dewatering treatment are concerned not only with the requirement for a thickening tank, an accumulation tank, a mechanical thickener or the like, but also with the expensive cost for their construction. Besides, in combined use of the thickening tank and the accumulation tank, oxygen is depleted for such a long time that the activated sludge decays and emits bad odor. Moreover, if phosphorus is biologically removed from the reaction system, the phosphorus absorbed in the activated sludge is held in the thickening tank and the accumulation tank under anaerobic conditions, until the phosphorus is released again.

## DISCLOSURE OF THE INVENTION

The invention of claim 1 comprises: one or more reaction tanks; aeration and agitation means disposed in each of the reaction tanks for selectively performing either anaerobic agitation or aerobic agitation in the reaction tank; one or more settling tanks arranged to return settled sludge to the reaction tank; a dewatering machine arranged to remove activated sludge liquor directly from a final reaction tank and dewater the liquor; and control means for controlling the aeration and agitation means such that the anaerobic agitation and the aerobic agitation alternate with each other in each reaction tank.

Regarding the invention of claim 1 above, the invention of claim 2 is arranged to return activated sludge liquor in the final reaction tank to a first reaction tank.

In a process for treating activated sludge in wastewater by means of the activated sludge treatment system of claim 1 or 2 above, the invention of claim 3 is arranged to remove the activated sludge liquor directly from the reaction tank in proportion to an increase and decrease in the volume of influent load, thereby controlling a sludge retention time (SRT) to a fixed value.

Regarding claim 3 above, the invention of claim 4 is arranged to regulate a ratio between anaerobic and aerobic times in the reaction tank in response to the volume of influent load, and to control a solids retention time under aerobic conditions (ASRT) to a fixed value, thereby removing nitrogen in wastewater.

The above-structured system of the present invention is arranged to remove the activated sludge liquor directly from the reaction tank in accordance with the increase/decrease of the volume of influent load into the reaction tank, to regulate the quantity of activated sludge and the ratio of the aerobic treatment time relative to the anaerobic treatment time, and to control the ASRT to a fixed level. Thereby, even a treatment plant with an enormous shift of load can constantly exhibit a good treatment capacity and achieve effective waste treatment. In addition, the construction cost can be reduced, because expensive incidental facilities such as the thickening tank and the accumulation tank are unnecessary.

In the process of the present invention, the quantity of activated sludge liquor removal is increased or decreased by a pump, such that the SRT is inversely proportional to the volume of influent load into the reaction tank. In other words, the quantity of activated sludge removal from the reaction tank is increased and decreased in accordance with the rise and fall of the volume of influent load.

In this system, the ratio of the aerobic treatment time relative to the anaerobic treatment time is regulated in accordance with the volume of influent load into the reaction tank. Generally, this regulation process is carried out by adjusting either of the aeration time for supplying air into the reaction tank or the non-aeration time, or both.

This system intends to control and fix the ASRT by combining the regulation of the quantity of activated sludge removal with the regulation of the aerobic time ratio, as mentioned above. The ASRT is a solids retention time (day) in the reaction tank under aerobic conditions, and expressed by the following formula:

SRT = Quantity of activated sludge in the reaction tank (which is equal to that of solids in the reaction tank) (kg)/
Quantity of excess sludge (kg/day) MLSS x V/(SSe x Qe)

wherein

MLSS: Concentration of activated sludge in the reaction tank (mg/L) (which is equal to the solids concentration in the reaction tank)
V: Volume of the reaction tank ($m^3$)
SSe: Concentration of excess sludge (mg/L)
Qe: Quantity of excess sludge removal ($m^3$/day)

Provided the excess sludge is directly removed from the reaction tank, the MLSS equals the SSe, and the SRT is represented as follows:

$$SRT = MLSS \times V/(MLSS \times Qe)$$

With HRT = 24 x V/Q, the SRT is expressed in the formula below:

$$SRT = MLSS \times (Q/24) \times HRT/(MLSS \times Qe)$$

$$= Q \times HRT/(Qe \times 24)$$

in which

Q:      Quantity of influent wastewater ($m^3$/day)
HRT:   Hydraulic retention time (hour)

ASRT = SRT x X

X:      Ratio of aerobic treatment time (proportion of daily aerobic treatment time, aerobic treatment time/24 hours)

Namely, the ASRT indicates the aerobic treatment time (days) out of the activated sludge retention time (SRT, which is equal to the solids retention time) . In the anaerobic/aerobic treatments, the ASRT is determined by regulation of the quantity of excess sludge removal and setting of the aerobic treatment time (However, the SRT equals the ASRT in a process of the aerobic treatment only).

**BRIEF DESCRIPTION OF THE DRAWINGS**

Fig. 1 is a schematic view of a device concerning Embodiment 1 of the present invention.
Fig. 2 is a schematic view of a device concerning Embodiment 2 of the present invention.

**BEST MODE FOR CARRYING OUT THE INVENTION**

Embodiments of the present invention are hereinafter described with reference to the attached drawings.

(Embodiment 1)

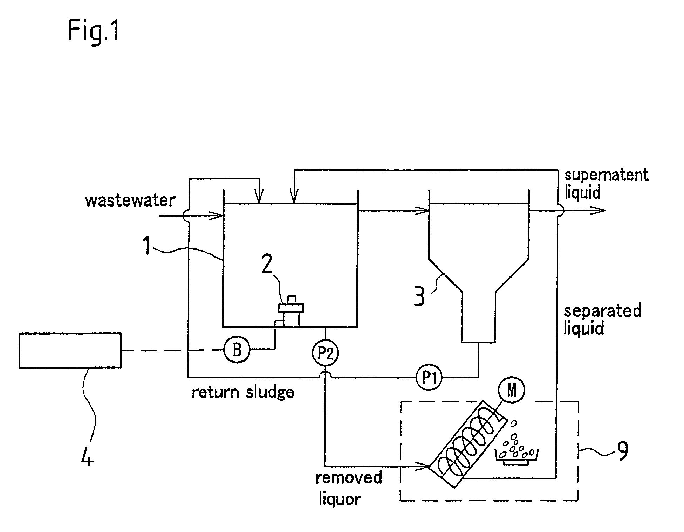

In this embodiment, the present invention is applied to a single-tank anaerobic/aerobic process. As shown in Fig. 1, a single reaction tank 1 accommodates a submersible aerating/agitating device 2 which selectively conducts anaerobic agitation and aerobic agitation. The submersible aerating/agitating device 2 supplies air (oxygen) from a blower B or stops its supply by control means 4, and, during discontinuation of the air supply, effects wastewater mixing alone. Thereby, the reaction tank 1 is alternately brought under aerobic or anaerobic conditions as required. Adjacent to the reaction tank 1, there is disposed a multi-disc dewatering machine 9. Sludge in a settling tank 3 is sent back to the reaction tank 1 by a pump P1 as return sludge, and supernatant liquid is drained out of the system. The reaction tank 1 is also equipped with a pump P2 for removing activated sludge mixed liquor from the bottom. The removed mixed liquor is transported to the multi-disc dewatering machine 9 and dewatered directly, with the separated liquid being sent back into the reaction tank 1.
In order to keep a sufficient denitrification time in the reaction tank 1, it was assumed that the quantity of influent wastewater was 200 $m^3$/day and the daily change of the influent water quantity was three times. This gave the ASRT for complete nitrification of about 19.2 days. Under these conditions, the device of Embodiment 1 was operated, with the aerobic time and the anaerobic time being 12 hours/day each. The T-N in the influent water was 21.2 to 35.8 mg/l (average: 27.9 mg/l) and the T-N in the treated water was 1.4 to 3.4 mg/l (average: 2.8 mg/l), with a treatment capacity of 91.7%.
In Embodiment 1, the dual-purpose submersible aerating/agitating device 2 was disposed in the single reaction tank for both anaerobic agitation and aerobic agitation. Instead, a single-purpose agitator and a diffuser may be used in combination for the anaerobic agitation and aerobic agitation.

(Embodiment 2)

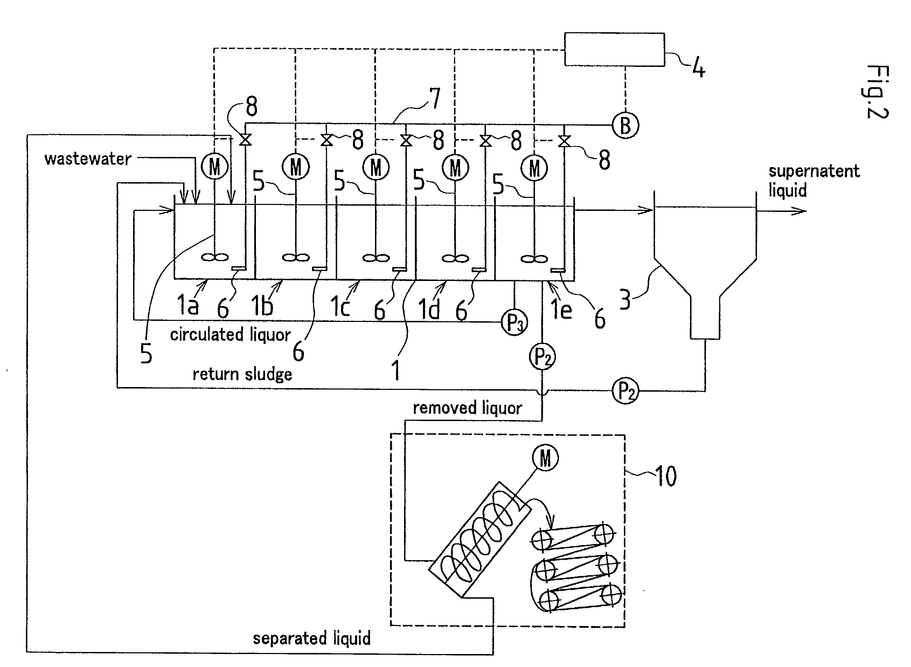

This Embodiment is an example of a modified anaerobic-aerobic circulation method. As illustrated in Fig. 2, use is made of multi-stage reaction tanks (1a-1e), which comprise five-stage tanks arranged in a column in this Embodiment. Each reaction tank (1a-1e) accommodates an agitator 5, and a submersible aerating/agitating device 6 which is connected via a valve 8 to an air duct 7 for supplying air from a blower B. The submersible aerating/agitating device 6 supplies air or stops its supply by opening or closing the valve 8. Discontinuation of air supply brings about anaerobic conditions and air supply provides aerobic conditions. Activated sludge liquor is transported and circulated from the final reaction tank 1e to the first-stage tank 1a by a pump P3. Wastewater is introduced in the first-stage reaction tank 1a, and, for example, subjected to denitrification reactions in the first and second reaction tanks (1a, 1b) in the early stage and then subjected to nitrification reactions in the third to fifth reaction tanks (1c, 1d, 1e) in the late stage. Part of the nitrified sludge mixed liquor is transported, circulated and denitrified. Sludge in a settling tank 3 is sent back to the reaction tank 1 as return sludge by a pump P2, with supernatant liquid being drained out of the system.

Sludge mixed liquor is removed from the bottom of the final fifth reaction tank 1e by a pump P2. The removed sludge mixed liquor is directly dewatered by a belt press-type dewatering machine 10 equipped with a multi-disc thickner. When operated under the same conditions, the treatment capacity of Embodiment 2 was approximately equivalent to that of Embodiment 1.

The liquid separated by the dewatering machine 10 is allowed to return to the reaction tank 1. Other arrangements are the same as in Embodiment 1.

In Embodiment 2, instead of the belt press-type dewatering machine 10 equipped with a multi-disc thickener, there may be used a plurality of multi-disc dewatering machines 9. Further, the submersible agitator and the diffuser in the reaction tank may be replaced with a dual-purpose submersible aerating/agitating device for anaerobic agitation and aerobic agitation.

## INDUSTRIAL APPLICABILITY

As described above, according to the activated sludge treatment device and the activated sludge treatment process of the present invention, even a treatment plant with highly variable loads can constantly exhibit a desirable treatment capacity and accomplish an efficient wastewater treatment. This is advantageous for application in a sewage treatment plant located in a tourist spot, where the volumes of loads heavily depend on the number of visitors.

## Claims

1. An activated sludge treatment system for wastewater which comprises:

   one or more reaction tanks;
   aeration and agitation means disposed in each of the reaction tanks for selectively performing either anaerobic agitation or aerobic agitation in the reaction tank;
   one or more settling tanks arranged to return settled sludge to the reaction tank;
   a dewatering machine arranged to remove activated sludge liquor directly from a final reaction tank and dewater the liquor; and
   control means for controlling the aeration and agitation means such that the anaerobic agitation and the aerobic agitation alternate with each other in each reaction tank.

2. An activated sludge treatment system for wastewater according to claim 1, wherein the activated sludge liquor in the final reaction tank is allowed to return to a first reaction tank on the farthest upstream end.

3. An activated sludge treatment process for wastewater utilizing the activated sludge treatment system for wastewater of claim 1 or 2, which comprises removing the activated sludge liquor directly from the reaction tank in proportion to an increase and decrease in the volume of influent load, thereby controlling a sludge retention time (SRT) to a predetermined value.

4. An activated sludge treatment process according to claim 3, which comprises regulating a ratio between anaerobic and aerobic times in the reaction tank in response to the volume of influent load, and controlling a solids retention time under aerobic conditions (ASRT) to a predetermined value, thereby removing nitrogen in wastewater.

Fig.1

Fig.2

wastewater

circulated liquor

return sludge

removed liquor

separated liquid

supernatent liquid

## INTERNATIONAL SEARCH REPORT

| International application No. |
| --- |
| PCT/JP00/02358 |

**A. CLASSIFICATION OF SUBJECT MATTER**
Int.Cl$^7$   C02F3/12, C02F3/34

According to International Patent Classification (IPC) or to both national classification and IPC

**B. FIELDS SEARCHED**

Minimum documentation searched (classification system followed by classification symbols)
Int.Cl$^7$   C02F3/12, C02F3/34

Documentation searched other than minimum documentation to the extent that such documents are included in the fields searched
Jitsuyo Shinan Koho          1926-1996    Toroku Jitsuyo Shinan Koho  1994-2000
Kokai Jitsuyo Shinan Koho   1971-2000    Jitsuyo Shinan Toroku Koho  1996-2000

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
| --- | --- | --- |
| X | JP, 2841131, B2 (KUBOTA Corporation), 24 December, 1998 (24.12.98), Full text   (Family: none) | 1-4 |
| A | JP, 11-697, A (Hitachi Kiden Kogyo, Ltd.), 06 January, 1999 (06.01.99), Claims; Fig. 1   (Family: none) | 1,3 |
| A | JP, 6-320190, A (Ebara Infilco Co., Ltd.), 22 November, 1994 (22.11.94), page 4, left column, lines 29 to 31   (Family: none) | 1 |

☐  Further documents are listed in the continuation of Box C.     ☐  See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 June, 2000 (22.06.00) | 04 July, 2000 (04.07.00) |

| Name and mailing address of the ISA/ Japanese Patent Office | Authorized officer |
| --- | --- |
| Facsimile No. | Telephone No. |

Form PCT/ISA/210 (second sheet) (July 1992)